# EUROPEAN PATENT APPLICATION

(11) **EP 4 835 386 A1**
(43) Date of publication of application: **04.11.2026**
(21) Application number: 25305617.0
(22) Date of filing: 29.04.2025
(51) Int. Cl.: F25J 3/02

(54) **PURIFICATION OF CARBON DIOXIDE**

(71) Applicant: Technip Energies France, 92741 Nanterre Cedex (FR)
(72) Inventor: MATHIEU, Vincent, 92741 Nanterre Cedex (FR); FEKKAK-VALAT, Mathieu, 92741 Nanterre Cedex (FR)
(74) Representative: Edson, Russell Gregory

(57) **Abstract**

Aspects of the present invention relate to a carbon dioxide purification unit and a method for purifying a carbon dioxide concentrated gas mixture. The carbon dioxide purification unit (1000) comprises a heat integration unit (E103) and a purification column (C101), wherein the heat integration unit (E103) is configured to cool a feed stream (103) of carbon dioxide concentrated gas mixture against at least a carbon dioxide-rich stream (114) and a purge stream (108) supplied from the purification column (C101). The carbon dioxide purification unit (1000) comprises a first heat exchanger (E104) and a first expander-compressor unit (U101) with a first expander (X101) and a first compressor (K101) being mechanically connected, wherein the first heat exchanger (E104) is configured to receive a carbon dioxide-rich stream (120) discharged from the first compressor (K101) and a purge stream (110) discharged from the heat integration unit (E103), wherein the first expander (X101) is configured to receive and expand a purge stream (126) discharged from the first heat exchanger (E104) and thereby driving the first compressor (K101).

## Description

### Technical Field

The present disclosure relates to a carbon dioxide purification unit and a method for purifying a carbon dioxide concentrated gas mixture.

### Background

CO₂ recovery focuses on capturing CO₂ from various sources. CO₂ purification (removing impurities) is a crucial step to ensure that the recovered CO₂ is suitable for its intended use. This is essential for various applications where high-purity CO₂ is required, such as in the food and beverage industry, medical uses. High-purity CO₂ is required also for geologic carbon sequestration. This involves storing CO₂ deep underground in geological formations to prevent it from entering the atmosphere and contributing to climate change. High-purity CO₂ can be used also as a raw material to produce sustainable aviation fuel.

There are various CO₂ purification methods. Cryogenic separation/ purification is one of them. Cryogenic purification can achieve high levels of CO₂ purity. However, this process can be costly and less energy-efficient compared to other methods.

Overall, there is a need to optimize the energy consumption of cryogenic CO₂ purification.

### Summary

Aspects and embodiments of the carbon dioxide purification unit and the method for purifying carbon dioxide of the present disclosure are summarized below.

The carbon dioxide purification unit may be for purifying a carbon dioxide concentrated gas mixture supplied into the carbon dioxide purification unit. The carbon dioxide purification unit comprises a heat integration unit and a purification column. The purification column may be provided with a bottom reboiler circuit (called also "bottom reboiler"). The heat integration unit is configured to cool a feed stream of a carbon dioxide concentrated gas mixture. The purification column is configured to receive the feed stream cooled and discharged from the heat integration unit and generate at least a carbon dioxide-rich stream and a purge stream. The heat integration unit is configured to receive the carbon dioxide-rich stream discharged from the purification column after a pressure letdown by an expansion valve. The heat integration unit is configured to receive the purge stream discharged from the purification column. The heat integration unit is configured to cool the feed stream of the carbon dioxide concentrated gas mixture by heat exchange between the feed stream, and at least a carbon dioxide-rich stream and a purge stream supplied from a purification column. The carbon dioxide-rich stream and the purge stream are configured to provide cooling duty to cool the hot feed stream in the heat integration unit. Then the carbon dioxide-rich stream and the purge stream after passing through the heat integration unit are discharged from the heat integration unit in the exit direction.

The carbon dioxide purification unit comprises a first heat exchanger and a first expander-compressor unit. The first heat exchanger and a first expander-compressor unit may form a first thermal-mechanical integration module, preferably arranged downstream of the heat integration unit. The first expander-compressor unit comprises a first expander and a first compressor. The first expander and the first compressor are mechanically connected. The first heat exchanger and the heat integration unit are different structural units. The first compressor is configured to receive and compress a first carbon dioxide-rich stream discharged from the heat integration unit. This means that the first compressor is configured to receive and compress the first carbon dioxide-rich stream discharged directly from the heat integration unit or the first compressor is configured to receive and compress a first carbon dioxide-rich stream after being discharged from the purification column and passed through heat integration unit. The first heat exchanger is configured to receive a carbon dioxide-rich stream discharged from the first compressor. This means that the first heat exchanger is configured to receive a carbon dioxide-rich stream directly from the first compressor. The first heat exchanger is configured to receive a purge stream discharged from the heat integration unit. This means that the first heat exchanger is configured to receive a purge stream after being discharged from the purification column and passed through heat integration unit or the first heat exchanger is configured to receive a purge stream directly from the heat integration unit. The first heat exchanger may be configured to allow an indirect heat exchange between the purge stream and the carbon dioxide-rich stream. The first expander is configured to receive and expand a purge stream discharged from the first heat exchanger and thereby to drive the first compressor. This means that the first expander is configured to receive and expand a purge stream discharged directly from the first heat exchanger. The expander driving the compressor should be understood throughout this specification as such that the expander drives the compressor at least partially. The first expander may be mechanically connected to the first compressor through a shared shaft. The first expander and the first compressor may form a single integrated unit. The first expander and the first compressor may form a turboexpander-compressor. The first heat exchanger may be arranged downstream of the heat integration unit. The first expander-compressor unit may be arranged downstream of the heat integration unit.

Typical concentrations of carbon dioxide in carbon dioxide concentrated gas mixture may be about 30-95%mol CO₂ (dry basis) in flue gases from an oxyfuel combustion unit or about 40-95%mol CO₂ (dry basis) in enriched flue gas from a CO₂ enrichment unit.

The thermal (heat) and mechanical work integration between the streams reduces advantageously the energy consumed by the carbon dioxide purification unit. The mechanical energy generated by the expander may be advantageously used to drive the compressor directly. The mechanical energy generated by the expander may be advantageously used to drive the compressor completely. The mechanical energy generated by the expander may be advantageously used to supply most of the power to drive the compressor with supplementary power from additional sources. The carbon dioxide purification unit described here may eliminate or significantly reduce the need of the external power source for compressing the carbon dioxide-rich stream before it is exported from the carbon dioxide purification unit as a purified CO₂ product. The carbon dioxide purification unit described here may advantageously eliminate or significantly reduce the need of external cooling medium for cooling of the carbon dioxide-rich stream before it is exported from the carbon dioxide purification unit as a purified CO₂ product. The carbon dioxide purification unit described here may advantageously eliminate or significantly reduce the need of external heating medium for heating of the purge stream before it is released into the atmosphere. Further, the heating duty to increase the temperature of the purge stream before expanding it for release into the atmosphere may be fully provided by the heat generated during the compression of the carbon dioxide-rich stream.

The cooling of the carbon dioxide-rich stream may be provided completely through the indirect heat exchange between the carbon dioxide-rich stream after compression and the purge stream. The mechanical and thermal integration between the purge streams and the carbon dioxide-rich streams here may significantly reduce the energy consumption of the CO₂ purification unit. The carbon dioxide purification unit described here may enable a simultaneous mechanical and thermal integration of the purge stream and the carbon dioxide-rich stream (purified CO₂ product) after these streams have left the heat integration unit. The simultaneous mechanical and thermal integration of the purge stream and the carbon dioxide-rich stream (purified CO₂ product) after leaving the heat integration unit may eliminate completely using additional heating/cooling mediums and/or external electrical, mechanical or thermal power sources (water or air coolers, heaters) in the carbon dioxide purification unit downstream of the heat integration unit. Thermal integration means a heat transfer between a cold (purge stream) and hot stream (carbon dioxide-rich stream) without providing external cooling/heating sources. Mechanical integration between the purge and carbon dioxide-rich streams occurs via an expander-compressor unit (turboexpander). The energy gained by the expansion of the purge stream is used to compress the carbon dioxide-rich stream.

The carbon dioxide-rich stream generated in the purification column may be configured to leave the carbon dioxide purification unit as a purified CO₂ product directly after being compressed and cooled by an indirect heat exchange with the purge stream, optionally in one compression-cooling step or in multiple compression-cooling steps. The carbon dioxide purification unit may be configured such that a heating duty for the purge stream produced in the purification column and passed through the heat integration unit is provided completely by an indirect heat exchange with the carbon dioxide-rich stream. Providing a cooling or heating duty completely by an indirect heat exchange may mean that no cooling/heating medium is used. The carbon dioxide-rich stream exiting the heat integration unit may be configured to be cooled merely by the indirect heat exchange with the purge vapor stream before leaving the carbon dioxide purification unit as a final product.

The mechanical energy required for compressing the carbon dioxide-rich stream may be recovered completely or almost completely from the energy generated by the expansion of the purge stream in the expander-compressor unit/units arranged downstream of the heat integration unit. In case the mechanical power recovered by the purge stream expansion is not sufficient, the expander-compressor unit may be coupled with an electrical motor on the same shaft.

The carbon dioxide-rich stream (i.e. purified carbon dioxide product) exiting the carbon dioxide purification unit at a first outlet may have a pressure between 25 and 35 bara (2.5 and 3.5 MPaa) or between 29 and 31 bara (2.9 and 3.1 MPaa). "MPaa" stands for megapascal absolute pressure. "Bara" stands for bar absolute pressure. The carbon dioxide-rich stream exiting the carbon dioxide purification unit may have a purity between 95% to 99.9% mol. Purity of the final CO₂ product is defined by the individual maximum allowed contents of contaminants in the product. The carbon dioxide purification unit may be configured to produce a purge stream exiting the carbon dioxide purification unit at a second outlet, optionally the second outlet is formed as a stack.

The feed stream supplied to the carbon dioxide purification unit may be previously compressed and/or dehydrated. The feed stream supplied to the carbon dioxide purification unit may be compressed in a feed compressor. The compressed feed stream in the feed compressor may be then dehydrated in a feed dehydration unit. Different methods may be used for the dehydration in the dehydration unit such as glycol dehydration using a liquid desiccant; adsorption using solid desiccants. The dehydration in the dehydration unit may comprise a cooling step and an adsorption step. The compression may be done in multiple stages. The feed stream being compressed and dehydrated may be further compressed at an inlet side booster compressor of the carbon dioxide purification unit arranged upstream of the heat integration unit. The feed stream compressed in the booster compressor may be cooled through an aftercooler of the carbon dioxide purification unit arranged downstream of the booster compressor before the stream enters the heat integration unit.

A heat integration unit may provide cooling and partial condensation of the feed stream. The heat integration unit may be configured to maintain extremely low temperatures ensuring optimal performance. The heat integration unit may be a heat exchanger, preferably a large heat exchanger allowing the heat integration between multiple streams. The heat integration unit may meet all the needs for cooling the hot stream (the feed stream) and/or heating the cold streams (the carbon dioxide-rich streams and the purge stream fed from the purification column to the heat integration unit) by heat integration. The heat integration unit may be a cold box, in which the purification column is integrated.

The feed stream (i.e. the incoming high-pressure feed stream) in the carbon dioxide purification unit may be cooled while passing through the heat integration unit. The feed stream entering the heat integration unit may have a temperature between 15 °C and 50 °C, or between 35 and 45 °C or between 38 and 42 °C. The feed stream entering the heat integration unit may have a pressure between 20 and 90 bara (9 MPaa), or between 30 and 80 bara (8 MPaa) or between 45 and 75 bara (7.5 MPaa). The feed stream entering the heat integration unit may be called as a hot stream. The feed stream may be partially liquefied due to cooling in the heat integration unit. A vapor phase of the cooled feed stream may be depleted in CO₂. The vapor phase may be composed of non-condensables (or light gases like nitrogen, oxygen, argon etc.). A liquid phase of the cooled feed stream may be enriched in CO₂. The liquid phase of the cooled feed stream may be partially purified. Nitrogen, oxygen and argon contents may be less in the liquid phase of the cooled incoming feed stream in comparison to the hot incoming feed stream.

A purification column may be an equipment designed to separate CO₂ from other gases and impurities. The cooled and partially liquefied gas mixture containing CO₂ discharged from the heat integration unit (the feed stream of a carbon dioxide concentrated gas mixture) may be fed into the purification column through a feed system. The bottom reboiler may heat the liquid phase of the incoming stream to generate vapor, which rises through the column.

The stream exiting the heat integration unit in the direction of the purification column may be called as a cooled feed stream. A pressure of the cooled feed stream may be reduced in an expansion valve arranged between the heat integration unit and the purification column. A pressure of the cooled feed stream may be reduced to a pressure between 10 and 55 bara (1 and 5.5 MPaa), or 20 and 40 bara (2.0 and 4.0 MPaa) or 25 and 35 bara (2.5 and 3.5 MPaa).

In the purification column dissolved non-condensables (light gases) contained in the liquid phase may be separated, so that the CO₂ product meets the required purity. The degassed non-condensables may go upward throughout the packing or trays, enabling heat and mass transfer between the liquid and vapor phases, enriching the liquid phase in CO₂. The purification column may produce two products, a carbon dioxide-rich liquid (can be called as bottom liquid or purified CO₂) forming a carbon dioxide-rich stream and overhead vapor forming an overhead vapor stream or the so-called purge stream. The purge stream may contain the majority of the non-condensables (otherwise called contaminants) that shall be removed from the CO₂ product so that it meets the required purity.

The heat integration unit and the purification column may be thermally integrated. At least a bottom reboiler of the purification column may be thermally integrated in the heat integration unit. A hot stream passing through the heat integration unit may be cooled by an indirect heat exchange with the cold streams coming from the purification column. The feed stream may be a hot stream. A carbon dioxide-rich stream withdrawn from the purification column may be a cold stream. A reboiler fluid (for instance the CO₂ enriched bottom liquid withdrawn close to the bottom of the purification column) leaving the purification column to be recirculated through the heat integration unit may be a cold stream. The reboiler fluid may be heated in the heat integration unit to provide a reboiling duty in the purification column. Reboiler duty refers to the amount of heat energy required to vaporize the liquid at the bottom of a purification column.

The carbon dioxide-rich stream (bottom liquid) discharged from the purification column may be expanded through an expansion valve before entering the heat integration unit. The carbon dioxide-rich stream (bottom liquid) discharged from the purification column may be split into two or three streams, for example into a first carbon dioxide-rich stream, a second carbon dioxide-rich stream and/or a third carbon dioxide-rich stream. The two or three carbon dioxide-rich streams may be expanded through expansion valves before entering the heat integration unit. The two or three carbon dioxide-rich streams may be expanded to become streams having different pressure and temperature levels. The expansion may cool these streams further to provide the main part of the duty required for the cooling and partial condensation of the feed stream in the heat integration unit.

The heat integration unit may comprise a first pass (a passageway) for the incoming feed stream. The heat integration unit may comprise a second pass (a passageway) for the purge stream supplied from the purification column. The heat integration unit may comprise a third pass (a passageway) for the first carbon dioxide-rich stream supplied from the purification column. The heat integration unit may comprise a fourth pass (a passageway) for the second carbon dioxide-rich stream supplied from the purification column. The heat integration unit may comprise a fifth pass (a passageway) for the third carbon dioxide-rich stream supplied from the purification column. The heat integration unit may comprise passageways for the reboiler fluids circulated within the heat integration unit.

All components of the carbon dioxide purification unit may have an inlet to receive and an outlet to discharge the streams. The components may be equipped with control valves used to regulate the flow of the fluid entering and leaving. The streams may be transported within pipelines.

The carbon dioxide purification unit may comprise further thermal-mechanical integration modules with the corresponding heat-exchangers and expander-compressor units arranged downstream of the first heat-exchanger and the first expander-compressor unit. The number of compressions stages and expansion stages may vary depending on the feed stream composition, and CO₂ product export pressure. Addition of a further a thermal-mechanical integration module or modules may further reduce the electrical energy consumption of the carbon dioxide purification unit.

The carbon dioxide purification unit may comprise a second heat exchanger and a second expander-compressor unit. The second heat exchanger and a second expander-compressor unit may form a second thermal-mechanical integration module. The second expander-compressor comprises a second expander and a second compressor. The second expander and the second compressor are mechanically connected. The second compressor is configured to receive and compress a carbon dioxide-rich stream discharged from the first heat exchanger. This means that the second compressor is configured to receive and compress a carbon dioxide-rich stream discharged directly from the heat integration unit. The second heat exchanger is configured to receive a carbon dioxide-rich stream discharged from the second compressor. This means that the second heat exchanger is configured to receive a carbon dioxide-rich stream discharged directly from the second compressor. The second heat exchanger is configured to receive a purge stream discharged from the first expander. This means that the second heat exchanger is configured to receive a purge stream discharged directly from the first expander. The second heat exchanger may be configured to allow an indirect heat exchange between the purge stream and the carbon dioxide-rich stream. The second expander is configured to receive and expand a purge stream discharged from the second heat exchanger and thereby to drive the second compressor. This means that the second expander is configured to receive and expand a purge stream discharged directly from the second heat exchanger and thereby to drive the second compressor.

The second compressor may be configured to receive and compress a second carbon dioxide-rich stream after being combined with the carbon dioxide-rich stream discharged from the first heat exchanger. The second carbon dioxide-rich stream may be discharged from the heat integration unit before entering the second compressor. The second carbon dioxide-rich stream may be one of the split streams of carbon dioxide-rich stream (bottom liquid) discharged from the purification column. The carbon dioxide-rich stream (bottom liquid) discharged from the purification column may be a main stream, which can be split into multiple streams, and the second carbon dioxide-rich stream may be one of these split streams. The second carbon dioxide-rich stream may be one of the split streams of carbon dioxide-rich stream (bottom liquid) discharged from the purification column and passed through heat integration unit before entering the second compressor. The second carbon dioxide-rich stream and the carbon dioxide-rich stream discharged from the first heat exchanger may be combined before entering the second compressor, for example at an inlet of the second compressor.

The second carbon dioxide-rich stream may have a different pressure than the first carbon dioxide-rich stream. The second carbon dioxide-rich stream may have a higher pressure than the first carbon dioxide-rich stream. The first carbon dioxide-rich stream may be one of the split streams of carbon dioxide-rich stream (bottom liquid) discharged from the purification column.

Using two pressure stages/ two different pressure levels may provide economic advantages. This may have the advantage to decrease the amount of energy required for compression. Because one of the streams has a higher level of pressure and it requires less energy to increase its pressure to the required level before it exits the carbon dioxide purification unit as a CO₂ product.

The carbon dioxide purification unit may comprise a third heat exchanger and a third expander-compressor unit. The third heat exchanger and the third expander-compressor unit may form a third thermal-mechanical integration module. The third expander-compressor unit comprises a third expander and a third compressor. The third expander and a third compressor are mechanically connected. The third compressor is configured to receive and compress a carbon dioxide-rich stream discharged from the second heat exchanger. This means that the third compressor is configured to receive and compress a carbon dioxide-rich stream discharged directly from the second heat exchanger. The third heat exchanger is configured to receive a carbon dioxide-rich stream discharged from the third compressor. This means that the third heat exchanger is configured to receive a carbon dioxide-rich stream directly from the third compressor. The third heat exchanger is configured to receive a purge stream discharged from the second expander. This means that the third heat exchanger is configured to receive a purge stream directly from the second expander. The third heat exchanger is configured to allow an indirect heat exchange between the purge stream and the carbon dioxide-rich stream. The third expander is configured to receive and expand a purge stream discharged from the third heat exchanger and thereby to drive the third compressor. The third expander may be configured to receive and expand a purge stream discharged directly from the third heat exchanger and thereby to drive the third compressor.

The third compressor may be configured to receive and compress a third carbon dioxide-rich stream after being combined with the carbon dioxide-rich stream discharged from the second heat exchanger. The third carbon dioxide-rich stream may be discharged from the heat integration unit before entering the third compressor. The third carbon dioxide-rich stream may be discharged from the purification column and passed through heat integration unit before entering the third compressor. The third carbon dioxide-rich stream and the carbon dioxide-rich stream discharged from the second heat exchanger may be combined before entering the third compressor, for example at an inlet of the third compressor. The third carbon dioxide-rich stream may be one of the split streams of carbon dioxide-rich stream (bottom liquid) discharged from the purification column. The carbon dioxide-rich stream (bottom liquid) discharged from the purification column may be a main stream, which can be split into multiple streams, and the third carbon dioxide-rich stream may be one of these split streams. The third carbon dioxide-rich stream may be one of the split streams of carbon dioxide-rich stream (bottom liquid) discharged from the purification column and passed through heat integration unit before entering the third compressor.

The third carbon dioxide-rich stream may have a different pressure than the first carbon dioxide-rich stream and/or the second carbon dioxide-rich stream. The third carbon dioxide-rich stream may have a higher pressure than the first carbon dioxide-rich stream and/or the second carbon dioxide-rich stream. The second carbon dioxide-rich stream may have a higher pressure than the first carbon dioxide-rich stream. The first, second and third carbon dioxide-rich streams may be each one of the split streams of carbon dioxide-rich stream (bottom liquid) discharged from the purification column.

Using three stages/ three different pressure levels may provide economic advantages. This may have the advantage to further decrease the amount of energy required for compression. Because two of the streams have a higher level of pressure and it requires less energy to increase their pressure to the required level before they exit the carbon dioxide purification unit as a CO₂ product.

The carbon dioxide purification unit may comprise an exit-side heat exchanger configured to receive and exchange heat between a carbon dioxide-rich stream discharged from the first, second or third heat exchanger and a purge stream discharged from the first, the second or the third expander. The carbon dioxide purification unit may comprise an exit-side heat exchanger configured to receive and exchange heat between a carbon dioxide-rich stream discharged from the first, second or third heat exchanger and a purge stream discharged from the first, the second or the third expander, directly before these two streams are exported from the carbon dioxide purification unit. This may further improve the energy efficiency of the unit because an exit-side heat exchanger allows to optimize the temperature of the purge stream and carbon-dioxide rich stream simultaneously for their export out of the carbon dioxide purification unit without using cooling/heating mediums.

The carbon dioxide purification unit may comprise a carbon dioxide recovery membrane unit configured to separate carbon dioxide from the purge stream discharged from the purification column and passed through the heat integration unit. The carbon dioxide purification unit may comprise a carbon dioxide recovery membrane unit configured to separate carbon dioxide from the purge stream discharged directly from the heat integration unit. The carbon dioxide recovery membrane unit is configured to discharge a permeate stream enriched in carbon dioxide. The permeate stream enriched in carbon dioxide is configured to be recycled to the feed compressor. The feed stream and the permeate stream enriched in carbon dioxide are thus mixed and sent to the booster compressor after being dehydrated in the dehydration unit. The booster compressor is arranged upstream of the heat integration unit. The carbon dioxide recovery membrane unit is configured to discharge a retentate stream. The retentate stream is configured to be fed into the first heat exchanger. A retentate stream is a purge stream. The retentate stream is largely depleted in CO₂.

The carbon dioxide recovery membrane unit may improve the CO₂ recovery rate of the carbon dioxide purification unit.

The CO₂ recovery rate may be the percentage of CO₂ existing in the feed stream that is recovered and sent in the CO₂ product stream.

The bottom reboiler circuit may be thermally integrated into the heat integration unit. This may be done by withdrawing a reboiling fluid from the purification column. The reboiling fluid may be withdrawn from the bottom of the purification column. The reboiling fluid withdrawn from the bottom of the purification column may be transported through a conduit arrangement to the heat integration unit. The reboiling fluid passing through the heat integration unit may be reboiled and transported back to the bottom of the purification column. This causes the liquid to vaporize and rise through the column. The remaining liquid, enriched in less volatile components, is collected at the bottom as the bottom's product.

The purification column may be equipped with a side reboiler circuit (also called as "side reboiler") in addition to the bottom reboiler circuit (also called as "bottom reboiler"). The side reboiler may provide additional heat at an intermediate point in the column. The side reboiler allows advantageously increase the operating pressure in the purification column which results in an increase of the CO₂ recovery rate.

The side reboiler circuit may be thermally integrated into the heat integration unit. This may be done by withdrawing a reboiling fluid from an intermediate region of the purification column. The reboiling fluid withdrawn may be transported through a conduit arrangement to the heat integration unit. The reboiling fluid passing through the heat integration unit may be reboiled and transported back to the intermediate region of the purification column.

All definitions and advantages described with respect to the carbon dioxide purification unit above in the preceding passages apply to the method for purification carbon dioxide as well.

A method for purifying carbon dioxide may comprise the following steps. A carbon dioxide concentrated gas mixture may be separated into at least a carbon dioxide-rich stream and a purge steam in a carbon dioxide purification unit. The carbon dioxide purification unit may be equipped with a heat integration unit and a purification column with a bottom reboiler. A feed stream of carbon dioxide concentrated gas mixture may be cooled in a heat integration unit by indirect heat exchange between the feed stream, and at least a carbon dioxide-rich stream and a purge stream generated and supplied from the purification column. After passing through the heat integration unit the purge stream and the carbon dioxide-rich stream are transported in the exit direction. The carbon dioxide-rich stream or a first carbon dioxide-rich stream discharged from the heat integration unit may be compressed in a first compressor of the carbon dioxide purification unit. The carbon dioxide-rich stream may be discharged from the purification column and then passed through the heat integration unit before entering the first compressor. The carbon dioxide-rich stream may be cooled in a first heat exchanger of the carbon dioxide purification unit after compression. The carbon dioxide-rich stream may be cooled in a first heat exchanger against a purge stream produced in the carbon dioxide purification column unit. The purge stream may be discharged from the purification column and then passed through the heat integration unit before being heated against the carbon dioxide-rich stream in the first heat exchanger. The purge stream may be expanded in a first expander. The purge stream discharged from the first heat exchanger may be expanded in a first expander of the carbon dioxide purification unit. Expanding the purge stream discharged from the first heat exchanger in the first expander may drive the first compressor. The first compressor and the first expander may be mechanically connected. The first compressor may be driven by the mechanical energy gained through the expansion of the purge stream in the first expander.

The compressed carbon dioxide-rich stream may be cooled solely through the indirect heat exchange with the purge stream of the carbon dioxide purification unit before the compressed carbon dioxide-rich stream leaves the carbon dioxide purification unit.

A carbon dioxide-rich stream discharged from the first heat exchanger may be compressed in a second compressor. A carbon dioxide-rich stream discharged from the second compressor may be cooled in a second heat exchanger through an indirect heat exchange with a purge stream discharged from the first expander. The purge stream may be heated during the indirect heat exchange with the carbon dioxide-rich stream. A purge stream discharged from the second heat exchanger may be expanded in a second expander. Expanding the purge stream discharged from the second heat exchanger in the second expander may drive the second compressor. The second compressor and the second expander may be mechanically connected. The second compressor may be driven by the mechanical energy gained through the expansion of the purge stream in the second expander.

A second carbon dioxide-rich stream may be compressed in the second compressor. A second carbon dioxide-rich stream may be compressed in the second compressor after being combined with the carbon dioxide-rich stream discharged from the first heat exchanger. The second carbon dioxide-rich stream may be discharged from the heat integration unit before entering the second compressor. The second carbon dioxide-rich stream may be discharged from the purification column and passed through heat integration unit before entering the second compressor.

The second carbon dioxide-rich stream may have a different pressure than the first carbon dioxide-rich stream. The second carbon dioxide-rich stream may have a higher pressure than the first carbon dioxide-rich stream.

A carbon dioxide-rich stream discharged from the second heat exchanger may be compressed in a third compressor. A carbon dioxide-rich stream discharged from the second compressor may be cooled in a third heat exchanger. A carbon dioxide-rich stream discharged from the second compressor may be cooled in a third heat exchanger through an indirect heat exchange with a purge stream discharged from the second expander. A purge stream received from the third heat exchanger may be expanded in a third expander. Expanding the purge stream discharged from the third heat exchanger in the third expander may drive the third compressor. The third compressor and the third expander may be mechanically connected. The third compressor may be driven by the mechanical energy gained through the expansion of the purge stream in the third expander.

A third carbon dioxide-rich stream may be compressed in the third compressor. A third carbon dioxide-rich stream may be compressed in the third compressor after being combined with the carbon dioxide-rich stream discharged from the second heat exchanger. The third carbon dioxide-rich stream may be discharged from the heat integration unit before entering the third compressor. The third carbon dioxide-rich stream may be discharged from the purification column and passed through heat integration unit before entering the third compressor.

The pressure of the third carbon dioxide-rich stream may be different than the pressure of the first and/or the second carbon dioxide-rich stream. The pressure of the third carbon dioxide-rich stream may be higher than the pressure of the second carbon dioxide-rich stream. The pressure of the second carbon dioxide-rich stream may be higher than the pressure of the first carbon dioxide-rich stream.

Carbon dioxide may be separated from the purge stream discharged from the heat integration unit by using a carbon dioxide recovery membrane unit. A permeate stream enriched in carbon dioxide may be discharged from the carbon dioxide recovery membrane unit to a feed compressor. The feed stream and the permeate stream enriched in carbon dioxide are thus mixed and sent to the booster compressor after being dehydrated in the dehydration unit. A retentate stream discharged from the carbon dioxide recovery membrane unit may be fed to the first heat exchanger. A retentate stream is a purge stream. The retentate stream is largely depleted in CO₂.

The purification column may be equipped with a side reboiler in addition to the bottom reboiler. The side reboiler may provide additional heat at an intermediate point in the column. The side reboiler may advantageously increase the pressure in the purification column which results in a better recovery of the CO₂.

A carbon dioxide-rich stream discharged from the first, second or third heat exchanger may be further cooled in an exit-side heat exchanger by an indirect heat exchange with a purge stream discharged from the first, the second or the third expander before it is exported from the carbon dioxide purification unit. A purge stream discharged from the first, the second or the third expander may be further heated in an exit-side heat exchanger by an indirect heat exchange with a carbon dioxide-rich stream discharged from the first, second or third heat exchanger before it is released into the atmosphere.

The side reboiler may be thermally integrated into the heat integration unit. This may be done by withdrawing a reboiling fluid from an intermediate region of the purification column. The reboiling fluid withdrawn may be transported through a conduit arrangement to the heat integration unit. The reboiling fluid passing through the heat integration unit may be reboiled and transported back to the intermediate region of the purification column.

A feed stream of a carbon dioxide concentrated gas mixture may be cooled in the heat integration unit by indirect heat exchange with cold streams provided from a purification column. The feed stream fed from the heat integration unit may be separated in the purification column into a purge stream enriched in contaminant gases and a liquid enriched in carbon dioxide forming a carbon dioxide-rich stream. The pressure of a first portion of a carbon dioxide-rich stream discharged from the purification column may be reduced in an expander before entering the heat integration unit to provide cold stream in the heat integration unit for cooling of the feed stream. The pressure of a second portion of a carbon dioxide-rich stream discharged from the purification column may be reduced in an expander before entering the heat integration unit to provide cold stream in the heat integration unit for cooling of the feed stream. The pressure of a third portion of a carbon dioxide-rich stream discharged from the purification column may be reduced in an expander before entering the heat integration unit to provide cold stream in the heat integration unit for cooling of the feed stream.

According to the method described above for purifying carbon dioxide, a purified carbon dioxide product in the gas form may be produced from a feed stream of a carbon dioxide concentrated gas mixture.

Within the scope of this application, it is expressly intended that the various aspects, embodiments, examples and alternatives set out in the preceding paragraphs, in the claims and/or in the following description and drawings, and, in particular, the individual features thereof, may be taken independently or in any combination. All embodiments and/or features of any embodiment can be combined in any way and/or combination unless such features are incompatible. The applicant reserves the right to change any originally filed claim or file any new claim accordingly, including the right to amend any originally filed claim to depend from and/or incorporate any feature of any other claim, although not originally claimed in that manner.

### Brief Description of Drawings

One or more embodiments of the carbon dioxide purification unit and the method for purifying carbon dioxide comprising will now be described, by way of example only, with reference to the accompanying drawings, in which:
Figure 1 depicts a scheme for an embodiment of the carbon dioxide purification unit and the method for purifying carbon dioxide;
Figure 2 depicts a scheme for an embodiment of the carbon dioxide purification unit and the method for purifying carbon dioxide;
Figure 3 depicts a scheme for an embodiment of the carbon dioxide purification unit and the method for purifying carbon dioxide;
Figure 4 depicts a scheme for an embodiment of the carbon dioxide purification unit and the method for purifying carbon dioxide;
Figure 5 depicts a scheme for an embodiment of the carbon dioxide purification unit and the method for purifying carbon dioxide.

### Detailed Description

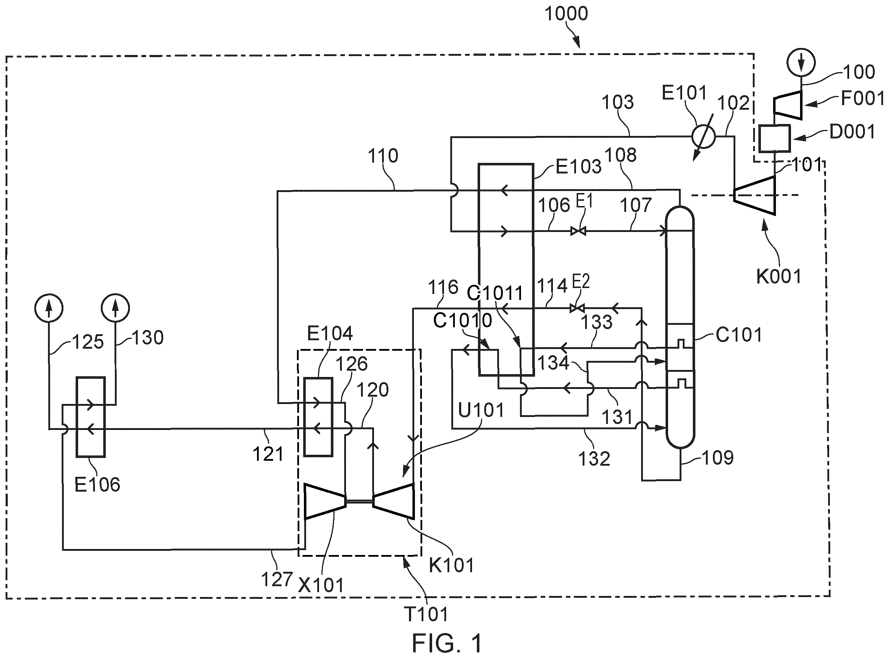

Figure 1 shows a scheme of the carbon dioxide purification unit 1000. Purifying carbon dioxide (CO₂) involves removing impurities and contaminants to produce high-purity CO₂ for various applications.

Carbon dioxide purification units are commonly used in various industrial plants, including chemical plants for ammonia and ethanol production; cement works to capture CO₂ from the production process; refineries for refining of petroleum products; hydrogen production, where CO₂ is a byproduct; fossil fuel power plants to capture CO₂ from flue gases; iron and steel industries to reduce emissions from steel production; and pulp and paper industries to capture CO₂ from the pulping process.

A feed stream 100 of a carbon dioxide concentrated gas mixture is supplied into a feed compressor F001 and a dehydration unit D001 (not part of the carbon dioxide purification unit 1000) to produce a compressed and dehydrated feed stream 101 to be supplied into the carbon dioxide purification unit 1000. For this, CO₂ may be captured from a flue gas using methods like post-combustion capture and undergo some pre-treatments. The captured CO₂ concentrated gas mixture may be compressed to increase its pressure, making it easier to transport and process. The compressed CO₂ concentrated gas mixture is cooled and thoroughly dehydrated before being supplied to the carbon dioxide purification unit 1000.

The compressed and dehydrated feed stream 101 is fed into the carbon dioxide purification unit 1000. The feed stream 101 goes through different units/modules changing its pressure and temperature. At the end of the process a purified compressed CO₂ gas product (carbon dioxide-rich product stream 125) is exported from the unit 1000 at a first outlet. Another product of the process is an output purge stream (purge gas) 130. Purge gas is typically a mixture of various gases, including contaminants. The composition of purge gas can vary depending on the specific industrial process, but it often includes oxygen (O₂), nitrogen (N₂), argon (Ar), hydrogen (H₂), methane (CH₄), carbon monoxide (CO), nitric oxide (NO), ethylene (C₂H₄), ethane (C₂H₆) and a small amount of carbon dioxide (CO₂).

The carbon dioxide purification unit 1000 is designed such that it allows a low energy intensive CO₂ purification process with high CO₂ recovery and purity (higher than 99 %mol). Purity of the final CO₂ product is defined by the individual maximum allowed contents of contaminants in the product. CO₂ recovery rate is the percentage of CO₂ existing in the CO₂ product that is recovered from the feed stream. CO₂ concentrations of the feed stream and the carbon dioxide-rich product stream can be measured by gas chromatography (GC) to calculate the CO₂ recovery rate.

In the following, the various steps that the compressed and dehydrated feed stream 101 undergoes in the carbon dioxide purification unit 1000, as shown in Figure 1, will be explained.

After compression of the feed stream 100 in the feed compressor F001 and dehydration in the dehydration unit D001, the compressed and dehydrated feed stream 101 may have a pressure of 31 bara (3.1 MPaa) and a temperature of 40.7°C. The compressed and dehydrated feed stream 101 is then compressed in a booster compressor K001 of the carbon dioxide purification unit 1000. The feed stream 102 after booster compression is cooled in an aftercooler E101 of the carbon dioxide purification unit 1000. The number of compression stages depends on the suction and discharge pressures of the booster compressor K001.

The feed stream 103 after compression and cooling is fed to a heat integration unit E103 of the carbon dioxide purification unit 1000. The feed stream 103 is cooled in the heat integration unit E103 and it undergoes partial liquefaction. The cooled feed stream 106 exiting the heat integration unit E103 is partially liquid and comprises a vapor phase. The vapor phase of the cooled feed stream 106 is depleted in CO₂ and is mainly composed of non-condensables (or light gases like nitrogen, oxygen, argon, etc.). The liquid phase is enriched in CO₂ and partially purified. Nitrogen, oxygen, argon, etc. contents are lower in the liquid phase of the cooled feed stream 106 than in the feed stream 101.

The pressure of this cooled feed stream 106 is reduced by a first expansion valve E1 arranged between the heat integration unit E103 and a purification column C101 of the carbon dioxide purification unit. The expanded feed stream 107 is fed to the purification column C101. This pressure reduction enables to reach a lower temperature at an inlet of the purification column C101. For a given CO₂ purity, the lower the temperature of the purification column C101, the higher the CO₂ recovery.

The purification column C101 is equipped with a bottom reboiler circuit C1010. The bottom reboiler circuit C1010 is a pipe system connected to the bottom of the purification column C101. This pipe system is integral to the overall operation of the purification column C101. The liquid from the bottom of the purification column C101 is fed into the bottom reboiler circuit C1010. The bottom reboiler circuit C1010 has a bottom reboiler feed stream 131 and a bottom reboiler return stream 132. These streams 131, 132 of the bottom reboiler circuit C1010 are integrated in the heat integration unit E103. The bottom reboiler feed stream 131 transports the liquid to the heat integration unit E103 and provides a part of the duty required for the cooling and for the partial condensation of the feed stream 103 in the heat integration unit E103. The liquid passed through the heat integration unit E103 is heated and partially evaporated and then returned to the purification column C101 with the bottom reboiler return stream 132. This provides a reboiling duty to the purification column C101 and contributes to the separation process. The provided heat by the vapor phase returned by the bottom reboiler return stream 132 allows to degas the dissolved non-condensables (light gases) contained in the liquid phase in the purification column C101. This purifies the stream in the purification column C101 substantially and generates a CO₂ product meeting the required purity (maximum content of contaminants). These degassed non-condensables go upward throughout the packing or trays of the purification column C101, enabling heat and mass transfer between the liquid and vapor phases, enriching the liquid phase in CO₂.

For the thermal integration of the bottom reboiler circuit C1010 in the heat integration unit E103, the purification column C101 should be operated below a certain pressure. The lower the pressure in the column C101, the colder is the stream conveyed from the purification column C101 to the heat integration unit E103. This is important to ensure a given temperature approach (meaning a given temperature difference between the hot and cold composite curves at the pitch point) and thus to ensure a heat exchange in the heat integration unit E103.

The thermal integration of the bottom reboiler circuit C1010 in the heat integration unit E103 provides some advantages. For example, the reboiling duty for the purification column C101 is provided via the heat of the feed stream 103. This arrangement enables not to require the use of an external medium for heat exchange. Further, the cooling duty for cooling the feed stream 103 is provided partially by the bottom reboiler feed stream 131.

In addition to the bottom reboiler circuit C1010, the purification column C101 is equipped with a side reboiler circuit C1011 with streams (side reboiler feed stream 133) and (side reboiler return stream 134) being thermally integrated in heat integration unit E103. With this, a part of the duty required for the cooling and partial condensation of the feed stream 103 is provided. The side reboiler circuit C1011 facilitates the integration of the reboiler into the heat integration unit E103 and gives more flexibility in terms of thermal integration. The term flexibility refers to the possibility of increasing the column operating pressure, which results in an increase of the CO₂ recovery rate. The temperature and duty of the side reboiler circuit C1011 is adjustable so that the thermal integration can be optimized. The side reboiler improves also the energy efficiency and reduces the specific power consumed.

An overhead vapor stream, the so-called purge stream 108 is generated in the purification column C101. The purge stream 108 contains the majority of the non-condensables (otherwise called contaminants) that shall be removed from the CO₂ product so that it meets the required purity level. In the purge stream 108, there is also a small amount of CO₂. The purge stream 108 being cold is fed into the heat integration unit E103 for the thermal integration to provide a part of the duty required for the cooling and partial condensation of the feed stream 103. After thermal integration (after passing through the heat integration unit C101) the purge stream is discharged from the heat integration unit, which is called as "purge stream 110" or "purge stream 110 discharged from the heat integration unit E103".

A purification column bottoms liquid stream, being a carbon dioxide-rich stream 109 (purified CO₂ stream) constitutes the purified CO₂ product. The term "purification column bottoms liquid stream" refers to the liquid that is collected at the bottom of a purification column C101 after the separation process.

The carbon dioxide-rich stream 109 (purified CO₂) is discharged from the purification column (C101) and expanded via a second expansion valve E2. The stream after expansion is called as "first carbon dioxide-rich stream 114 after expansion". The first carbon dioxide-rich stream 114 after expansion is fed into the heat integration unit E103. After thermal integration, the first carbon dioxide-rich stream exits the heat integration unit E103, which is called as "first carbon dioxide-rich stream 116" or "first carbon dioxide-rich stream 116 discharged from the heat integration unit E103".

The purge stream 110 shall be expanded to be released to the atmosphere throughout a stack, whereas the carbon dioxide-rich stream 116 (purified CO₂ stream) shall be compressed for export as CO₂ product at 31 bara (3.1 MPaa). In this carbon dioxide purification unit 1000 these two complementary needs are combined. The energy recovered during the expansion of the purge stream 110 is used for the compression of the carbon dioxide-rich stream 116. Also, a heat exchange between these streams is provided to avoid the usage of external heating/cooling mediums. For this, in the carbon dioxide purification unit 1000, a first thermal-mechanical integration unit T101 with a first heat exchanger E104 and a first expander-compressor unit U101 are provided. The first expander-compressor unit U101 comprises a first expander X101 and a first compressor K101 connected to each other with a shaft.

The first carbon dioxide-rich stream 116 discharged from the heat integration unit E103 is fed into the first compressor K101. The purge stream 110 discharged from the first heat integration unit E103 is heated in the first heat exchanger E104 against a carbon dioxide-rich stream 120 discharged from the first compressor K101. Accordingly, the carbon dioxide-rich stream 120 discharged from the first compressor K101 is cooled down. Further, the first expander X101 is configured to receive and expand a purge stream 126 discharged from the first heat exchanger E104. And the mechanical energy gained by the expansion of the purge stream in the first expander X101 drives the first compressor K101. This reduces the specific power required by the carbon dioxide purification unit 1000.

A thermal integration occurs also between a purge stream 127 discharged from the first expander X101 and a carbon dioxide-rich stream 121 discharged from the first heat exchanger E104 in an exit-side heat exchanger E106.

In this example, the carbon dioxide-rich product stream 125 is exported from the carbon dioxide purification unit 1000 at 31 bara (3.1 MPaa) and 40°C.

The thermal-mechanical integration between the purge stream 110 and the carbon dioxide-rich stream 116 as well as the thermal integration of the bottom reboiler circuit C1010, and the side reboiler circuit C1011 of the purification column C101 in the heat integration unit E103 reduces the specific power required for the carbon purification unit 1000 in comparison to the carbon dioxide purification units utilizing external heating/cooling mediums and power sources.

The number of compressions stages and expansion stages may vary depending on the feed stream composition, and CO₂ product export pressure.

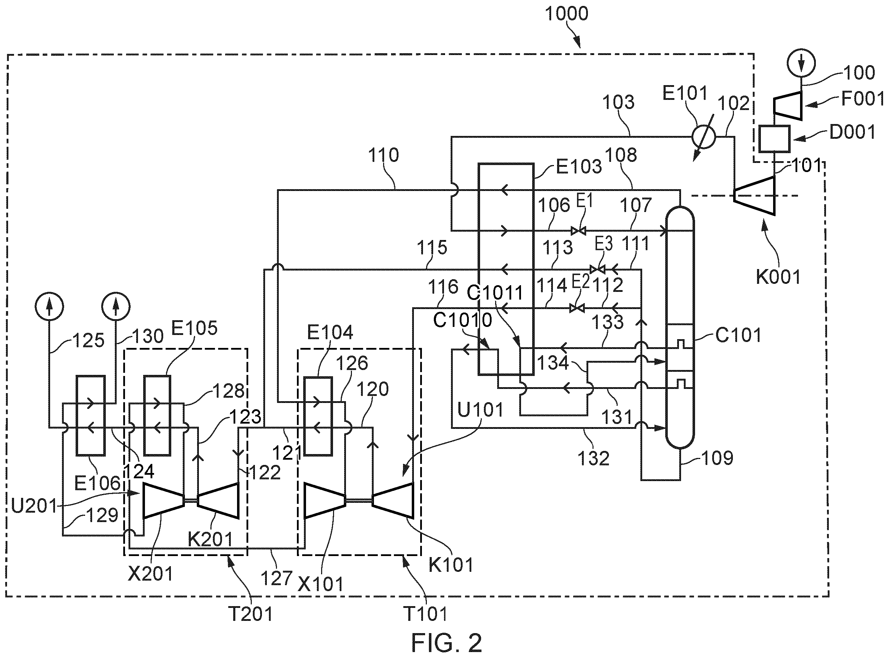

Figure 2 shows a scheme of the carbon dioxide purification unit 1000 equipped with a second thermal-mechanical integration unit T201 with a second heat exchanger E105 and a second expander-compressor unit U201. The second expander-compressor unit U201 comprises a second expander X201 and a second compressor K201 connected to each other with a shaft.

A possible composition of the feed stream 100 used for the calculations for the specific power of the carbon dioxide purification unit is represented in Table 1. This composition is chosen to compare the specific power of the current carbon dioxide purification unit 1000 with the state of art. A specific power may be calculated by the consumed electrical power divided by CO₂ product flowrate (kWhe/tCO₂).

**Table 1 - Composition of the feed stream 100**

| CO₂ (%mol) | N₂ (%mol) | Ar (%mol) | O₂ (%mol) | H₂O (%mol) | SO₂ (%mol) | NO (ppm mol) | NO₂ (ppm mol) |
|---|---|---|---|---|---|---|---|
| 72.8651 | 18.9959 | 2.69994 | 5.4392 | 0.0000 | 0.0000 | 4.9744 | 0.0043 |

The operating conditions of the principal streams according to the scheme shown in Figure 2 to achieve an outcome of 87.6% CO₂ recovery rate in the final CO₂ product are listed in Table 2.

**Table 2 - Operating conditions of the principal streams according to the scheme shown in Figure 2 for 87.6% CO₂ recovery rate**

| **Stream** | **Temperature (°C)** | **Pressure (bara)** | **Pressure (MPaa)** |
|---|---|---|---|
| 101 | 40.7 | 31.0 | 3.1 |
| 109 | -10.6 | 26.3 | 2.63 |
| 110 | 37.0 | 25.7 | 2.57 |
| 125 | 40.0 | 31.0 | 3.1 |
| 130 | 34.3 | 1.1 | 0.11 |

The 87.6% CO₂ recovery outcome is chosen for the comparison of the performance of the current carbon dioxide purification unit 1000 with the state of art. However, higher CO₂ recovery rates are achievable with the carbon dioxide purification unit 1000. The operating conditions of the principal streams according to the scheme shown in Figure 2 to achieve an outcome of 90.5% CO₂ recovery rate in the final CO₂ product are listed in Table 3.

**Table 3 - Operation conditions of the principal streams according to the scheme shown in Figure 2 for 90.5% CO₂ recovery rate**

| **Stream** | **Temperature (°C)** | **Pressure (bara)** | **Pressure (MPaa)** |
|---|---|---|---|
| 101 | 40.7 | 31.0 | 3.1 |
| 109 | 4.4 | 39.4 | 3.94 |
| 110 | 37.0 | 38.8 | 3.88 |
| 125 | 7.1 | 31.0 | 3.1 |
| 130 | 32.3 | 2.4 | 0.24 |

In this embodiment, the carbon dioxide-rich stream 109 discharged from the purification column C101 is divided into two streams: a first carbon dioxide-rich stream 112 before expansion, and a second carbon dioxide-rich stream 111 before expansion, which are both expanded at two different pressure levels, respectively by the second expansion valve E2 and by a third expansion valve E3. The objective of the expansion is to produce a significant cooling of these two streams. The first carbon dioxide-rich stream 114 after expansion is fed into the heat integration unit E103. A second carbon dioxide-rich stream 113 after expansion is fed into the heat integration unit E103. The first carbon dioxide-rich stream 114 after expansion and the second carbon dioxide-rich stream 113 after expansion are thermally integrated to the heat integration unit E103 to provide the main part of the duty required for the cooling and partial condensation of the feed stream 103. After thermal integration, the first carbon dioxide-rich stream 116 exits the heat integration unit E103. After thermal integration, a second carbon dioxide-rich stream 115 exits the heat integration unit E103. The second carbon dioxide-rich stream 115 has a higher pressure than the first carbon dioxide-rich stream 116. Using two pressure stages is energetically more advantageous to avoid recompressing all the low-pressure CO₂ streams to the export pressure.

The purge stream 110 shall be expanded to be released to the atmosphere throughout a stack, whereas the carbon dioxide-rich streams 115, 116 (purified CO₂ streams) shall be compressed for export as CO₂ product at 31 bara (3.1 MPaa). In this carbon dioxide purification unit 1000 these two complementary needs are combined. The energy recovered during the expansion of the purge stream 110 is used for the compression of the carbon dioxide-rich streams 115, 116. Using two thermal-mechanical integration units further improves the energy efficiency of the carbon dioxide purification unit and reduces the specific power required.

The same type of thermal integration applied in the heat exchanger E104 is carried out in the second heat exchanger E105 between the purge stream 127 discharged from the first expander X101, and a carbon dioxide-rich stream 123 discharged from the second compressor K201. The second compressor K201 receives the carbon dioxide-rich stream 121 discharged from the first heat exchanger E104 and the second carbon dioxide-rich stream 115 after being discharged from the purification column C101 and passed through the heat integration unit E103 (can be expressed also as being discharged from the heat integration unit E103 or being discharged directly from the heat integration unit E103). These two streams 121, and 115 are combined in a carbon dioxide-rich stream 122 entering the second compressor K201. Further, the second expander X201 is configured to receive and expand a purge stream 128 discharged from the second heat exchanger E105. And the mechanical energy gained by the expansion of the purge stream in the second expander X201 drives the second compressor K201. This reduces the specific power required by the carbon dioxide purification unit 1000.

A thermal integration occurs also between a purge stream 129 discharged from the second expander X201 and a carbon dioxide-rich stream 124 discharged from the second heat exchanger E105 in the exit-side heat exchanger E106.

The specific power consumed according to the scheme shown in Figure 2 is estimated to be ~ 60% less than the specific power consumed with the scheme disclosed in Figure 2 of US 8,257,476 B2 for 87.6% CO₂ recovery rate.

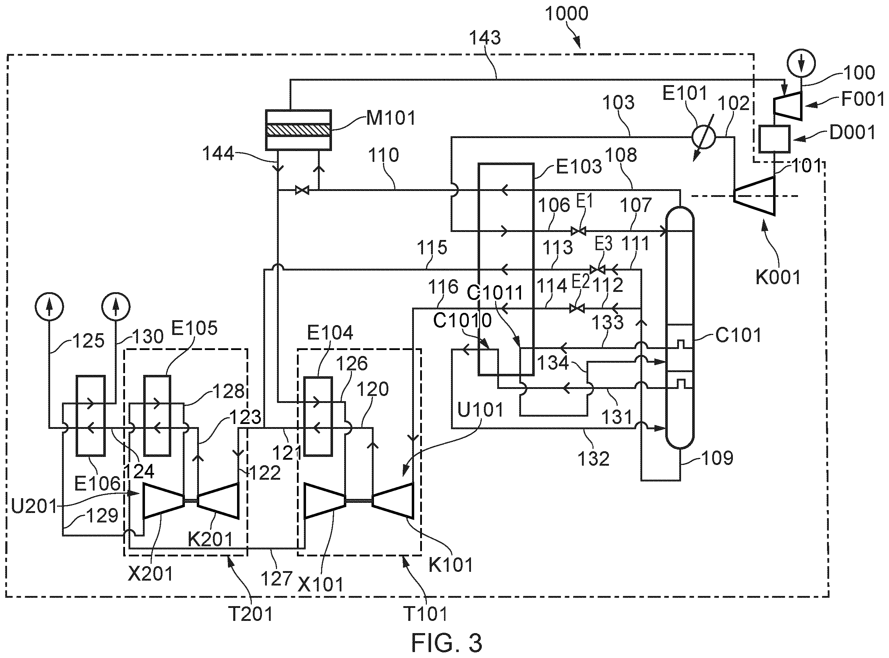

Figure 3 shows a scheme of the carbon dioxide purification unit 1000 equipped with a carbon dioxide recovery membrane unit M101. In this embodiment, the purge stream 110 is fed into the carbon dioxide recovery membrane unit M101 instead of being directly sent to the heat exchanger E104. The carbon dioxide recovery membrane unit M101 is for separating carbon dioxide from the purge stream 110. The carbon dioxide recovery membrane unit M101 allows to split the purge stream 110 into two streams called permeate stream 143 and retentate stream 144. A retentate stream 144 is a purge stream and is fed into the first heat exchanger E104. The permeate stream 143, resulting from the components that have passed through the recovery membrane unit M101 (selective membrane) consists mainly of the residual CO₂ in the purge stream 110, and a small number of contaminants that have slipped through the membrane. The produced permeate stream 143, being rich in CO₂ and at low pressure, is recycled to the feed compressor F001. The feed stream 100 and the permeate stream 143 enriched in carbon dioxide are thus mixed and sent to the booster compressor K001 after being dehydrated in the dehydration unit D001. The retentate stream 144 is composed of remaining components that have not passed through the membrane, namely non-condensable components and a very low amount of CO₂. This retentate stream 144 being largely depleted in CO₂ and still at high pressure and low/moderate temperature (respectively 27.5 bara (2.75 MPaa) and 6.1°C), is sent to first heat exchanger E104 to be thermally integrated with the carbon dioxide-rich stream 120 discharged from the first compressor K101 and then to the first expander X101 for mechanical integration. The mechanical and thermal integration between the purge streams and the carbon dioxide-rich streams are the same here as the scheme described in Figure 2.

Due to the utilization of a CO₂ selective recovery membrane on the purge stream 110, the operating conditions of the principal streams are adjusted and summarized in the following table 4, which is related to the utilization of a membrane with 99.7% CO₂ recovery.

**Table 4 - Operating conditions of the principal streams according to the scheme shown in Figure 3 for 97% CO₂ recovery rate**

| **Stream** | **Temperature (°C)** | **Pressure (bara)** | **Pressure (MPaa)** |
|---|---|---|---|
| 101 | 40.7 | 31.0 | 3.1 |
| 109 | -6.9 | 29.1 | 2.91 |
| 110 | 15.0 | 28.5 | 2.85 |
| 125 | 50.9 | 31.5 | 3.15 |
| 130 | 76.9 | 1.1 | 0.11 |
| 144 | 6.1 | 27.5 | 2.75 |

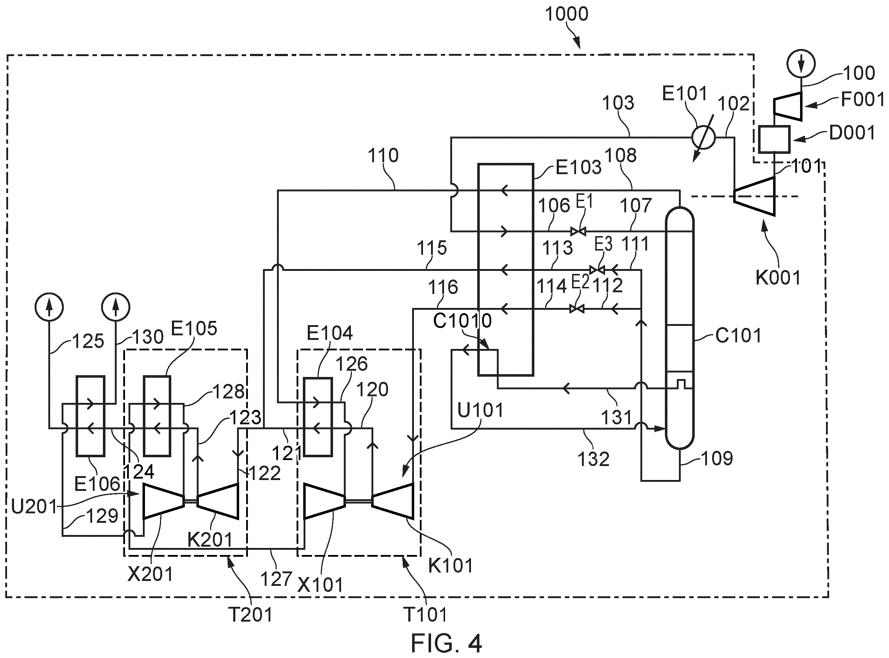

Figure 4 shows a scheme of the carbon dioxide purification unit 1000, which is not equipped with a side boiler circuit C1011 like the scheme in the Figures 1-3. The elimination of the side reboiler offers the benefit of simplifying the heat integration unit E103 design by reducing the number of passes and the complexity of the purification column C101, which includes, among other things, fewer nozzles and liquid collectors.

The operating conditions of the streams in this arrangement are summarized in the following table 5.

**Table 5 - Operating conditions of the principal streams according to the scheme shown in Figure 4**

| **Stream** | **Temperature (°C)** | **Pressure (bara)** | **Pressure (MPaa)** |
|---|---|---|---|
| 101 | 40.7 | 31.0 | 3.1 |
| 109 | 1.9 | 37.3 | 3.73 |
| 110 | 37.0 | 36.7 | 3.67 |
| 125 | 16.4 | 31.0 | 3.1 |
| 130 | 20.0 | 1.1 | 0.11 |

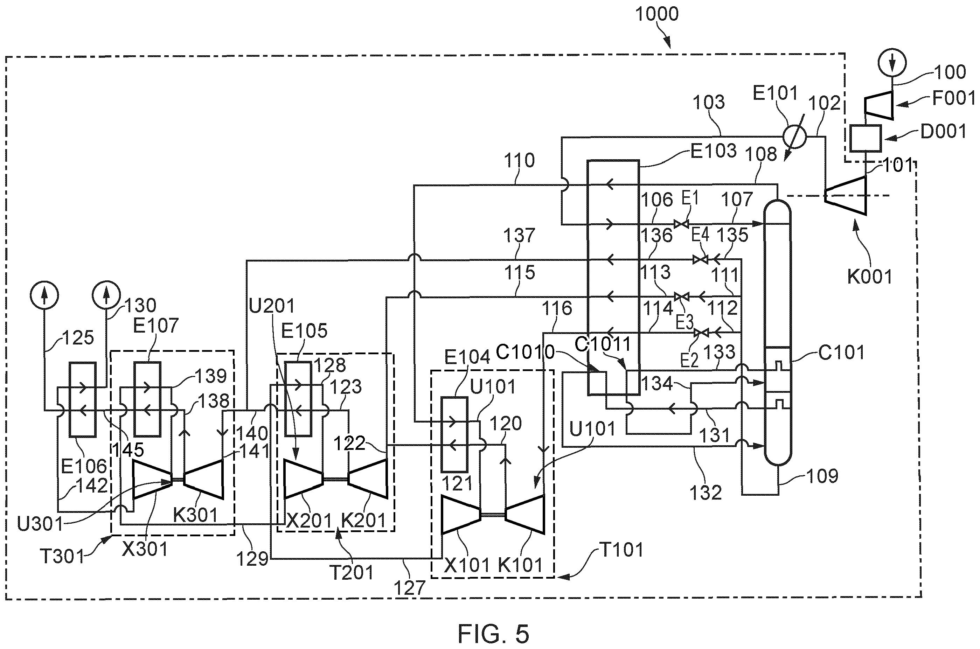

Figure 5 shows a scheme of the carbon dioxide purification unit 1000 with three different pressure levels of carbon dioxide-rich streams 116, 115, 137 and with a third thermal-mechanical integration unit T301. The third thermal-mechanical integration unit T301 comprises a third heat exchanger E107 and a third expander-compressor unit U301. The third expander-compressor unit U301 comprises a third expander X301 and a third compressor K301 connected to each other with a shaft.

The process configuration of the carbon dioxide purification unit 1000 is the same as Figure 2, except for the carbon dioxide-rich stream 109 discharged from the purification column (bottom liquid stream), which is divided into three streams instead of two: the first carbon dioxide-rich stream 112 before expansion, the second carbon dioxide-rich stream 111 before expansion, and a third carbon dioxide-rich stream 135 before expansion. Each of these streams is expanded to a distinct pressure level. The first carbon dioxide-rich stream 114 after expansion via the second expansion valve E2 is fed into the heat integration unit E103. The second carbon dioxide-rich stream 113 after expansion via the third expansion valve E3 is fed into the heat integration unit E103. The third carbon dioxide-rich stream 135 is expanded via a fourth expansion valve E4. A third carbon dioxide-rich stream 136 after expansion is fed into the heat integration unit E103. The heat integration unit E103 discharges a third carbon dioxide-rich stream 137 which has a higher temperature than the third carbon dioxide-rich stream 136 after expansion.

The third compressor K301 receives the third carbon dioxide-rich stream 137 discharged from the heat integration unit E103. The third carbon dioxide-rich stream 137 and a carbon dioxide-rich stream 140 discharged from the second heat exchanger E105 are combined in a carbon dioxide-rich stream 141 entering the third compressor K301.

The same type of thermal integration is done in the third heat exchanger E107 between the purge stream 129 discharged from the second expander X201, and a carbon dioxide-rich stream 138 discharged from the third compressor K301. Further, the third expander X301 is configured to receive and expand a purge stream 139 discharged from the third heat exchanger E107. And the mechanical energy gained by the expansion of the purge stream in the third expander X301 drives the third compressor K301.

A thermal integration occurs also between a purge stream 142 discharged from the third expander X301 and a carbon dioxide-rich stream 145 discharged from the third heat exchanger E107 in the exit-side heat exchanger E106.

The third carbon dioxide-rich stream 137 has a higher pressure than the second carbon dioxide-rich stream 115, which has a higher pressure than the first carbon dioxide-rich stream 116. Using three stages is energetically more advantageous to avoid recompressing all the low-pressure CO₂ streams to the export pressure. A third pressure stage reduces the need for recompression power even further in comparison to the embodiment shown in Figure 2 for example. The creation of this additional pressure level leads to a decrease of the specific power required by the carbon dioxide purification unit 1000.

The specific power of this scheme of the carbon dioxide purification unit 1000 shown in Figure 5 is estimated to be at least 11% less than the specific power of the carbon dioxide purification unit 1000 scheme shown in Figure 2.

**Table 6 - Operating conditions of the principal streams according to the scheme shown in Figure 5**

| **Stream** | **Temperature (°C)** | **Pressure (bara)** | **Pressure (MPaa)** |
|---|---|---|---|
| 101 | 40.7 | 31.0 | 3.1 |
| 109 | 3.7 | 38.6 | 3.86 |
| 110 | 37.0 | 38.0 | 3.8 |
| 125 | 15.0 | 31.0 | 3.1 |
| 130 | 22.3 | 1.6 | 0.16 |

### Legend to figures

- 1000: Carbon dioxide purification unit
- 100: Feed stream
- 101: Compressed and dehydrated feed stream
- F001: Feed compressor
- D001: Dehydration unit
- K001: Booster compressor
- E101: Aftercooler
- E1: First expansion valve
- E2: Second expansion valve
- E3: Third expansion valve
- E4: Fourth expansion valve
- 102: Feed stream after booster compression
- 103: Feed stream after compression and cooling
- E103: Heat integration unit
- 106: Cooled feed stream
- 107: Expanded feed stream
- C101: Purification column
- C1010: Bottom reboiler circuit
- C1011: Side reboiler circuit
- 108: Purge stream fed into the heat integration unit
- 109: Carbon dioxide-rich stream discharged from the purification column
- 110: Purge stream discharged from the heat integration unit
- 111: Second carbon dioxide-rich stream before expansion
- 112: First carbon dioxide-rich stream before expansion
- 113: Second carbon dioxide-rich stream after expansion
- 114: First carbon dioxide-rich stream after expansion
- 115: Second carbon dioxide-rich stream discharged from the heat integration unit
- 116: First carbon dioxide-rich stream discharged from the heat integration unit
- 120: Carbon dioxide-rich stream discharged from the first compressor
- 121: Carbon dioxide-rich stream discharged from the first heat exchanger
- 122: Combined carbon dioxide-rich stream entering the second compressor
- 123: Carbon dioxide-rich stream discharged from the second compressor
- 124: Carbon dioxide-rich stream discharged from the second heat exchanger
- 125: Carbon dioxide-rich product stream
- 126: Purge stream discharged from the first heat exchanger
- 127: Purge stream discharged from the first expander
- 128: Purge stream discharged from the second heat exchanger
- 129: Purge stream discharged from the second expander
- 130: Output purge stream
- 131: Bottom reboiler feed stream
- 132: Bottom reboiler return stream
- 133: Side reboiler feed stream
- 134: Side reboiler return stream
- T101: First thermal-mechanical integration unit
- E104: First heat exchanger
- U101: First expander-compressor unit
- X101: First expander
- K101: First compressor
- T201: Second thermal-mechanical integration unit
- E105: Second heat exchanger
- U201: Second expander-compressor unit
- X201: Second expander
- K201: Second compressor
- E106: Exit-side heat exchanger
- M101: Carbon dioxide recovery membrane unit
- T301: Third thermal-mechanical integration unit
- E107: Third heat exchanger
- U301: Third expander-compressor unit
- X301: Third expander
- K301: Third compressor
- 135: Third carbon dioxide-rich stream before expansion
- 136: Third carbon dioxide-rich stream after expansion
- 137: Third carbon dioxide-rich stream
- 138: Carbon dioxide-rich stream discharged from the third compressor
- 139: Purge stream discharged from the third heat exchanger
- 140: Carbon dioxide-rich stream discharged from the second heat exchanger
- 141: Combined carbon dioxide-rich stream entering the third compressor
- 142: Purge stream discharged from the third expander
- 143: Permeate stream
- 144: Retentate stream

## Claims

1. A carbon dioxide purification unit (1000) comprising,
a heat integration unit (E103) and a purification column (C101) wherein the heat integration unit (E103) is configured to cool a feed stream (103) of the carbon dioxide concentrated gas mixture against at least a carbon dioxide-rich stream (114) and a purge stream (108) fed into the heat integration unit (E103) from the purification column (C101),
a first heat exchanger (E104) and a first expander-compressor unit (U101) with a first expander (X101) and a first compressor (K101) being mechanically connected,
wherein the first heat exchanger (E104) is configured to receive a carbon dioxide-rich stream (120) discharged from the first compressor (K101) and a purge stream (110) discharged from the heat integration unit (E103),
wherein the first expander (X101) is configured to receive and expand a purge stream (126) discharged from the first heat exchanger (E104) and thereby driving the first compressor (K101).

2. The carbon dioxide purification unit according to claim 1, wherein the first compressor (K101) is configured to receive and compress a first carbon dioxide-rich stream (116) discharged from the heat integration unit (E103).

3. The carbon dioxide purification unit according to claim 1 or 2 comprises a second heat exchanger (E105) and a second expander-compressor unit (U201) with a second expander (X201) and a second compressor (K201) being mechanically connected, wherein the second compressor (K201) is configured to receive and compress a carbon dioxide-rich stream (121) discharged from the first heat exchanger (E104), wherein the second heat exchanger (E105) is configured to receive a carbon dioxide-rich stream (123) discharged from the second compressor (K201) and a purge stream (127) discharged from the first expander (X101), wherein the second expander (X201) is configured to receive and expand a purge stream (128) discharged from the second heat exchanger (E105) and thereby to drive the second compressor (K201).

4. The carbon dioxide purification unit according to claim 3, wherein the second compressor (K201) is configured to receive and compress a second carbon dioxide-rich stream (115) discharged from the heat integration unit (E103), preferably the second carbon dioxide-rich stream (115) being a split stream from a carbon dioxide-rich stream (109) discharged from the purification column (C101), after being combined with the carbon dioxide-rich stream (121) discharged from the first heat exchanger (E104), wherein optionally the second carbon dioxide-rich stream (115) has a different pressure than the first carbon dioxide-rich stream (116).

5. The carbon dioxide purification unit according to claim 3 or 4 comprises a third heat exchanger (E107) and a third expander-compressor unit (U301) with a third expander (X301) and a third compressor (K301) being mechanically connected, wherein the third compressor (K301) is configured to receive and compress a carbon dioxide-rich stream (140) discharged from the second heat exchanger (E105), wherein the third heat exchanger (E107) is configured to receive a carbon dioxide-rich stream (138) discharged from the third compressor (K301) and a purge stream (129) discharged from the second expander (X201), wherein the third expander (X301) is configured to receive and expand a purge stream (139) discharged from the third heat exchanger (E107) and thereby to drive the third compressor (X301).

6. The carbon dioxide purification unit according to claim 5, wherein the third compressor (K301) is configured to receive and compress a third carbon dioxide-rich stream (137) discharged from the heat integration unit (E103), preferably the third carbon dioxide-rich stream (137) being a split stream from a carbon dioxide-rich stream (109) discharged from the purification column (C101), after being combined with the carbon dioxide-rich stream (140) discharged from the second heat exchanger (E105), wherein optionally the third carbon dioxide-rich stream (137) has a different pressure than the first carbon dioxide-rich stream (116) and/or than the second carbon dioxide-rich stream (115).

7. The carbon dioxide purification unit according to any one of claims 1-6 comprises an exit-side heat exchanger (E106) configured to receive and exchange heat between a carbon dioxide-rich stream (121, 124, 145) discharged from the first, second or third heat exchanger and a purge stream (127, 129, 142) discharged from the first, the second or the third expander before these two streams are exported from the carbon dioxide purification unit (1000).

8. The carbon dioxide purification unit according to any one of claims 1-7 comprises a carbon dioxide recovery membrane unit (M101) configured to separate carbon dioxide from the purge stream (110) discharged from the heat integration unit (E103), wherein the carbon dioxide recovery membrane unit (M101) is configured to discharge a permeate stream (143) enriched in carbon dioxide to be recycled to a feed compressor (F001) being arranged upstream of the booster compressor (K001), and wherein the carbon dioxide recovery membrane unit (M101) is configured to discharge a retentate stream (144) to be fed into the first heat exchanger (E104).

9. The carbon dioxide purification unit according to any one of claims 1-8, wherein the purification column (C101) is equipped with a side reboiler circuit (C1011).

10. A method for purifying a carbon dioxide concentrated gas mixture comprising the following steps,
cooling a feed stream (103) of carbon dioxide concentrated gas mixture in a heat integration unit (E103) against at least a carbon dioxide-rich stream (114) and a purge steam (108) supplied from a purification column (C101)
compressing in a first compressor (K101) a first carbon dioxide-rich stream (116) discharged from the heat integration unit (E103),
cooling a carbon dioxide-rich stream (120) discharged from the first compressor (K101) in a first heat exchanger (E104) against a purge stream (110) discharged from the heat integration unit (E103),
expanding in a first expander (X101) a purge stream (126) discharged from the first heat exchanger (E104) and driving the first compressor (K101) by the mechanical energy gained through this expansion.

11. The method according to claim 11 comprising the following steps,
compressing in a second compressor (K201) a carbon dioxide-rich stream (121) discharged from the first heat exchanger (E104),
cooling a carbon dioxide-rich stream (123) discharged from the second compressor (K201) in a second heat exchanger (E105) through indirect heat exchange with a purge stream (127) discharged from the first expander (X101),
expanding in a second expander (X201) a purge stream (128) discharged from the second heat exchanger (E105) and driving the second compressor (K201) by the mechanical energy gained through this expansion.

12. The method according to claim 11 comprising the step of compressing in the second compressor (K201) a second carbon dioxide-rich stream (115) discharged from the heat integration unit (E103) after being combined with the carbon dioxide-rich stream (121) discharged from the first heat exchanger (E104), wherein optionally the second carbon dioxide-rich stream (115) has a different pressure than the first carbon dioxide-rich stream (116).

13. The method according to claim 11 or 12 comprising the following steps, compressing in a third compressor (K301) a carbon dioxide-rich stream (140) discharged from the second heat exchanger (E105),
cooling a carbon dioxide-rich stream (138) discharged from the second compressor (K301) in a third heat exchanger (E107) through an indirect heat exchange with a purge stream (129) discharged from the second expander (X201),
expanding in a third expander (X301) a purge stream (139) received from the third heat exchanger (E107) and driving the third compressor (K301) by the mechanical energy gained through this expansion.

14. The method according to claim 13 comprising the step of compressing in the third compressor (K301) a third carbon dioxide-rich stream (137) discharged from the heat integration unit (E103) after being combined with the carbon dioxide-rich stream (140) discharged from the second heat exchanger (E105), wherein optionally the third carbon dioxide-rich stream (137) has a different pressure than the first carbon dioxide-rich stream (116) and/or than the second carbon dioxide-rich stream (115).

15. The method according to any one of claims 10-14 comprising the following steps,
separating carbon dioxide from the purge stream (110) discharged from the heat integration unit (E103) by using a carbon dioxide recovery membrane unit (M101),
recycling a permeate stream (143) enriched in carbon dioxide discharged from the carbon dioxide recovery membrane unit (M101) to a feed compressor (F001) being arranged upstream of the heat integration unit (E103),
discharging a retentate stream (144) from the carbon dioxide recovery membrane unit (M101) to the first heat exchanger (E104).

## Amended claims

### Amended claims in accordance with Rule 137(2) EPC.

1. A carbon dioxide purification unit (1000) comprising, a heat integration unit (E103) and a purification column (C101) wherein the heat integration unit (E103) is configured to cool a feed stream (103) of the carbon dioxide concentrated gas mixture against at least a carbon dioxide-rich stream (114) and a purge stream (108) fed into the heat integration unit (E103) from the purification column (C101),
a first heat exchanger (E104) and a first expander-compressor unit (U101) with a first expander (X101) and a first compressor (K101) being mechanically connected,
wherein the first heat exchanger (E104) is configured to receive a carbon dioxide-rich stream (120) discharged from the first compressor (K101) and a purge stream (110) discharged from the heat integration unit (E103),
wherein the first expander (X101) is configured to receive and expand a purge stream (126) discharged from the first heat exchanger (E104) and thereby driving the first compressor (K101).

2. The carbon dioxide purification unit according to claim 1, wherein the first compressor (K101) is configured to receive and compress a first carbon dioxide-rich stream (116) discharged from the heat integration unit (E103).

3. The carbon dioxide purification unit according to claim 1 or 2 comprises a second heat exchanger (E105) and a second expander-compressor unit (U201) with a second expander (X201) and a second compressor (K201) being mechanically connected, wherein the second compressor (K201) is configured to receive and compress a carbon dioxide-rich stream (121) discharged from the first heat exchanger (E104), wherein the second heat exchanger (E105) is configured to receive a carbon dioxide-rich stream (123) discharged from the second compressor (K201) and a purge stream (127) discharged from the first expander (X101), wherein the second expander (X201) is configured to receive and expand a purge stream (128) discharged from the second heat exchanger (E105) and thereby to drive the second compressor (K201).

4. The carbon dioxide purification unit according to claim 3, wherein the second compressor (K201) is configured to receive and compress a second carbon dioxide-rich stream (115) discharged from the heat integration unit (E103), preferably the second carbon dioxide-rich stream (115) being a split stream from a carbon dioxide-rich stream (109) discharged from the purification column (C101), after being combined with the carbon dioxide-rich stream (121) discharged from the first heat exchanger (E104), wherein optionally the second carbon dioxide-rich stream (115) has a different pressure than the first carbon dioxide-rich stream (116).

5. The carbon dioxide purification unit according to claim 3 or 4 comprises a third heat exchanger (E107) and a third expander-compressor unit (U301) with a third expander (X301) and a third compressor (K301) being mechanically connected, wherein the third compressor (K301) is configured to receive and compress a carbon dioxide-rich stream (140) discharged from the second heat exchanger (E105), wherein the third heat exchanger (E107) is configured to receive a carbon dioxide-rich stream (138) discharged from the third compressor (K301) and a purge stream (129) discharged from the second expander (X201), wherein the third expander (X301) is configured to receive and expand a purge stream (139) discharged from the third heat exchanger (E107) and thereby to drive the third compressor (X301).

6. The carbon dioxide purification unit according to claim 5, wherein the third compressor (K301) is configured to receive and compress a third carbon dioxide-rich stream (137) discharged from the heat integration unit (E103), preferably the third carbon dioxide-rich stream (137) being a split stream from a carbon dioxide-rich stream (109) discharged from the purification column (C101), after being combined with the carbon dioxide-rich stream (140) discharged from the second heat exchanger (E105), wherein optionally the third carbon dioxide-rich stream (137) has a different pressure than the first carbon dioxide-rich stream (116) and/or than the second carbon dioxide-rich stream (115).

7. The carbon dioxide purification unit according to any one of claims 1-6 comprises an exit-side heat exchanger (E106) configured to receive and exchange heat between a carbon dioxide-rich stream (121, 124, 145) discharged from the first, second or third heat exchanger and a purge stream (127, 129, 142) discharged from the first, the second or the third expander before these two streams are exported from the carbon dioxide purification unit (1000).

8. The carbon dioxide purification unit according to any one of claims 1-7 comprises a carbon dioxide recovery membrane unit (M101) configured to separate carbon dioxide from the purge stream (110) discharged from the heat integration unit (E103), wherein the carbon dioxide recovery membrane unit (M101) is configured to discharge a permeate stream (143) enriched in carbon dioxide and a retentate stream (144) to be fed into the first heat exchanger (E104).

9. The carbon dioxide purification unit according to any one of claims 1-8, wherein the purification column (C101) is equipped with a side reboiler circuit (C1011).

10. A method for purifying a carbon dioxide concentrated gas mixture comprising the following steps,
cooling a feed stream (103) of carbon dioxide concentrated gas mixture in a heat integration unit (E103) against at least a carbon dioxide-rich stream (114) and a purge steam (108) supplied from a purification column (C101)
compressing in a first compressor (K101) a first carbon dioxide-rich stream (116) discharged from the heat integration unit (E103),
cooling a carbon dioxide-rich stream (120) discharged from the first compressor (K101) in a first heat exchanger (E104) against a purge stream (110) discharged from the heat integration unit (E103),
expanding in a first expander (X101) a purge stream (126) discharged from the first heat exchanger (E104) and driving the first compressor (K101) by the mechanical energy gained through this expansion.

11. The method according to claim 11 comprising the following steps,
compressing in a second compressor (K201) a carbon dioxide-rich stream (121) discharged from the first heat exchanger (E104),
cooling a carbon dioxide-rich stream (123) discharged from the second compressor (K201) in a second heat exchanger (E105) through indirect heat exchange with a purge stream (127) discharged from the first expander (X101),
expanding in a second expander (X201) a purge stream (128) discharged from the second heat exchanger (E105) and driving the second compressor (K201) by the mechanical energy gained through this expansion.

12. The method according to claim 11 comprising the step of compressing in the second compressor (K201) a second carbon dioxide-rich stream (115) discharged from the heat integration unit (E103) after being combined with the carbon dioxide-rich stream (121) discharged from the first heat exchanger (E104), wherein optionally the second carbon dioxide-rich stream (115) has a different pressure than the first carbon dioxide-rich stream (116).

13. The method according to claim 11 or 12 comprising the following steps, compressing
in a third compressor (K301) a carbon dioxide-rich stream (140) discharged from the second heat exchanger (E105),
cooling a carbon dioxide-rich stream (138) discharged from the second compressor (K301) in a third heat exchanger (E107) through an indirect heat exchange with a purge stream (129) discharged from the second expander (X201),
expanding in a third expander (X301) a purge stream (139) received from the third heat exchanger (E107) and driving the third compressor (K301) by the mechanical energy gained through this expansion.

14. The method according to claim 13 comprising the step of compressing in the third compressor (K301) a third carbon dioxide-rich stream (137) discharged from the heat integration unit (E103) after being combined with the carbon dioxide-rich stream (140) discharged from the second heat exchanger (E105), wherein optionally the third carbon dioxide-rich stream (137) has a different pressure than the first carbon dioxide-rich stream (116) and/or than the second carbon dioxide-rich stream (115).

15. The method according to any one of claims 10-14 comprising the following steps, separating carbon dioxide from the purge stream (110) discharged from the heat integration unit (E103) by using a carbon dioxide recovery membrane unit (M101), recycling a permeate stream (143) enriched in carbon dioxide discharged from the carbon dioxide recovery membrane unit (M101) to a feed compressor (F001) being arranged upstream of the heat integration unit (E103),
discharging a retentate stream (144) from the carbon dioxide recovery membrane unit (M101) to the first heat exchanger (E104).
